Europäisches Patentamt

(19) European Patent Office

Office européen des brevets

(11) Publication number: **0 152 266**
**B1**

(12) **EUROPEAN PATENT SPECIFICATION**

(45) Date of publication of patent specification: **19.04.89**

(51) Int. Cl.⁴: **G 11 B 17/022**

(21) Application number: **85300766.4**

(22) Date of filing: **05.02.85**

(54) **Rotary drive apparatus for a disc.**

(30) Priority: **06.02.84 JP 19648/84**

(43) Date of publication of application:
**21.08.85 Bulletin 85/34**

(45) Publication of the grant of the patent:
**19.04.89 Bulletin 89/16**

(84) Designated Contracting States:
**AT DE FR GB NL**

(56) References cited:
**EP-A-0 111 217**
**CH-A- 593 538**
**DE-B-2 118 657**
**FR-A-2 407 546**
**GB-A-2 081 959**

(73) Proprietor: **SONY CORPORATION**
**7-35 Kitashinagawa 6-Chome Shinagawa-ku**
**Tokyo 141 (JP)**

(72) Inventor: **Tsukahara, Nobuhiko c/o Patents**
**Division**
**Sony Corporation 7-35 Kitashinagawa-6**
**Shinagawa-ku Tokyo (JP)**

(74) Representative: **Thomas, Christopher Hugo**
**et al**
**D Young & Co 10 Staple Inn**
**London WC1V 7RD (GB)**

Courier Press, Leamington Spa, England.

## Description

This invention relates to a rotary drive apparatus for a disc, such as, for example, a micro-floppy disc.

More particularly the invention relates to a rotary drive apparatus for a disc, wherein the disc is mounted on a turntable, a central pin arranged in the centre of the turntable and a drive pin arranged in a position away from the centre of the turntable are respectively inserted into a central hole of the disc and a drive hole formed at a position away from the central hole of the disc, and the disc is driven by the drive pin due to rotation of the turntable, the drive hole of the disc being urged in the direction away from the centre of the turntable by the drive pin, so that the periphery of the central pin is pushed against the edge of the central hole and the centre of the disc coincides with that of the turntable.

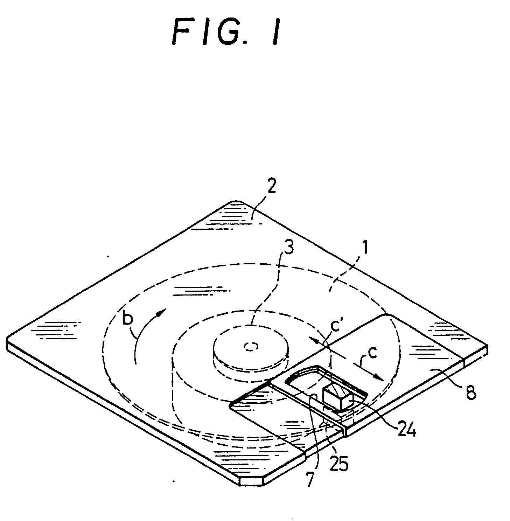

A previously proposed rotary drive apparatus for a micro-floppy disc (hereinafter to be referred to simply as a disc) will first be described with reference to Figures 1 to 3 of the accompanying drawings. Such apparatus is also disclosed in our UK patent specification GB—A—2 081 959.

As is known, a disc 1 is rotatably housed inside a disc cassette 2 comprising an upper half 2a and a lower half 2b. A central hole 4 and a drive hole 5 are formed respectively at the centre and a position away therefrom of a centre plate 3 which is made of metal and fixed at the centre of the disc 1. The central hole 4 has a square shape, and the drive hole 5 has a rectangular shape. The centre plate 3 is loosely fitted into a turntable receiving hole 6 formed at the centre of the lower half 2b. A pair of upper and lower pad/head receiving holes 7 are so formed respectively in the upper and lower halves 2a and 2b so as to extend along the radial direction of the disc 1 and are opened/closed by a shutter 8.

A central pin 11 and a drive pin 12 are arranged respectively at the centre of and a position away therefrom of a turntable 10 of a disc player. The central pin 11 is disposed at the upper end of a motor shaft 13 which is driven by a motor (not shown) arranged below the turntable 10. A ball bearing 14 is mounted on the upper end of the drive pin 12. The drive pin 12 is perpendicularly fixed to a pin mounting portion 15a of a leaf spring 15 of a substantially annular shape. The leaf spring 15 is fastened to the turntable 10 by a plurality of screws 17 through a spacer 16. A magnetic chuck 20 located above the leaf spring 15, and which comprises a magnet plate 18 and a yoke plate 19 is also fastened to the turntable 10 by the screws 17. A smooth sheet 21 made of a non-magnetic material is fixed onto the magnet plate 18. The upper end of the drive pin 12 with the ball bearing 14 projects upward through a hole 22 formed in the magnet plate 18 and the yoke plate 19.

The torsion of the pin mounting portion 15a of the leaf spring 15 allows the drive pin 12 to be pivotal in the radial direction of the turntable 10 as indicated by arrows $a$ and $a'$.

In a disc player, as shown in Figure 1, when the shutter 8 is open, the disc 1 in the disc cassette 2 is horizontally mounted on the turntable 10. When the disc 1 is mounted in this manner, a pad 24 and a recording/reproducing head 25 are inserted into the pad/head receiving holes 7 of the disc cassette 2. The disc 1 is resiliently pressed upward against the recording/reproducing head 25 by the pad 24. Meanwhile, as shown in Figures 2 and 3, when the disc 1 is mounted, while the central pin 11 and the drive pin 12 of the turntable 10 are inserted respectively into the central hole 4 and the drive hole 5 of the centre plate 3, the centre plate 3 is attracted by the magnetic chuck 20 while being kept horizontally on the smooth sheet 21.

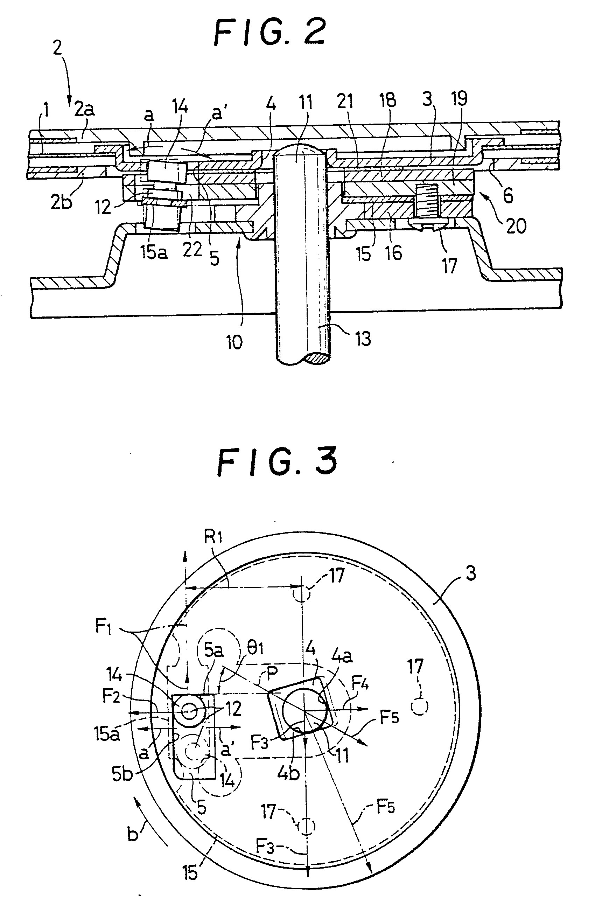

After the disc 1 has been mounted in this manner, the turntable 10 is driven by the motor in the direction of arrow $b$ as shown in Figures 1 and 3. The drive pin 12 urges a side 5a of the drive hole 5 of the centre plate 3 which is at its front side with respect to the rotating direction of the turntable 10, and thereby the disc 1 is rotated in the direction of arrow $b$. At the same time, the recording/reproducing head 25 is moved in the radial direction (indicated by arrows $c$ and $c'$ in Figure 1) so as to perform recording or reproduction of data on or from the disc 1.

In this previously proposed apparatus during the intial drive period of the disc 1, when the turntable 10 is driven in the direction of arrow $b$ while the drive pin 12 is inserted at the rear side of the drive hole 5 with respect to the rotating direction of the turntable 10, as indicated by the alternate long and short dashed line, the drive pin 12 is moved in the direction of arrow $b$ within the drive hole 5 and pressed against the front side 5a with respect to the rotating direction of the turntable 10, and pressed against a side 5b in a direction of the outer periphery of the turntable 10, as indicated by the solid line in Figure 3. During this operation, the torsion of the pin mounting portion 15a of the leaf spring 15 causes the drive pin 12 to incline in the direction of arrow $a'$ from the upright state indicated by the alternate long and short dashed line to the inclined state indicated by the solid line in Figure 2. Then, the force of the drive pin 12 in the direction of arrow $a$ owing to the reactive torque of the pin mounting portion 15a of the leaf spring 15 serves to press the drive pin 12 against the side 5b of the drive hole 5. As a result, the centre plate 3 of the disc 1 is moved in the direction of arrow $a$ shown in Figure 3, so that two sides 4a and 4b of the central hole 4 of the centre plate 3 are pressed against the side surface of the central pin 11 of the turntable 10. And thus, the centre line of the disc 1 is aligned with that of the turntable 10.

As shown in Figure 3, a rotary drive force F1 and a biasing force F2 act on the drive hole 5. The rotary drive force F1 acts to press the side 5a and rotate the disc 1 in the rotating direction of the turntable 10 (arrow $b$). The biasing force F2 acts to press the pin 12 against the side 5b and bias the drive hole 5 in a direction away from the centre of the turntable 10. As a result, reactive forces F3 and F4 are generated on the central pin 11. A resultant force

F5 of the reactive forces F3 and F4 acts to press the two sides 4a and 4b of the central hole 4 against the side surface of the central pin 11 and to align the centre line of the disc 1 with that of the turntable 10. A diagonal line P of the central hole 4 is inclined at about 30° to the side 5a of the drive hole 5, so that when the forces F1(=F3) and F2(=F4) are design values, the line of action of the resultant force F5 coincides substantially with the diagonal line P of the central hole 4.

However, an apparatus having the above-mentioned construction has the following problems.

Firstly, the force F2 is due to torsion of the pin mounting portion 15a of the leaf spring 15. Therefore, the upper limit of the force F2 is limited by the characteristics of the pin mounting portion 15a.

In contrast to this, the rotary drive force F1 is increased in proportion to the torque load on the disc, which mainly depends upon friction loads between the pad 24, and recording/reproducing head 25 and the disc 1.

The rotary drive force F1 and the torque T are given the following equation:

$$T = F1 \times R1$$

or

$$F1 = T/R1$$

where
R1 is the radius of the rotation of the drive pin 12.

This means that the rotary drive force F1 increases in proportion to an increase of the torque T load on the disc 1.

When the reactive force F3 increases with an increase in the rotary drive force F1 while the biasing force F2 is kept constant, as indicated by the alternate long and short dashed line in Figure 3, the line of action of the resultant force F5 deviates substantially from the diagonal line P of the central hole 4 towards one side 4b.

In the apparatus described above, the upper limit of the torque load on the disc 1 is thus limited. In other words, when thr torque increases excessively the biasing force F2 generated by the leaf spring 15 cannot correctly urge the central pin 11 towards the other side 4a of the central hole 4. Therefore, as indicated by the alternate long and short dashed line in Figure 3, the side 4a of the central hole 4 floats from the side surface of the central hole 11. As a consequence, the centre line of the disc 1 cannot be correctly aligned with that of the turntable 10.

The rotary drive force F1 and the biasing force F2 have a correlation in aligning the centre line of the disc 1 with that of the turntable 10. The characteristics of the leaf spring 15 for producing the biasing force F2 greatly affect the alignment performance of the disc 1. Therefore, the characteristics of the leaf spring 15 and the sizes of the respective parts must be controlled with high precision, resulting in an increase in the overall cost of the apparatus.

In the above-mentioned apparatus, in order to align the centre line of the disc 1 with that of the turntable 10, the upper limit of the torque load on the disc 1 must be limited. For this reason, the frictional force acting between the disc 1 or the pad 24 and the recording/reproducing head 25 must be adjusted with high precision. In addition, the frictional force acting on the drive pin 12 upon contact with the sides 5a and 5b of the drive hole 5 must be kept at a minimum. Because of this, an expensive ball bearing 14 is mounted on the upper end of the drive pin 12, so as to be able to press the drive pin 12 against the sides 5a and 5b of the drive hole 5 through the ball bearing 14. However, this also increases the cost of the apparatus.

Furthermore, in the above apparatus, when the biasing force F2 is pressing the ball bearing 14 of the drive pin 12 against the side 5a of the drive hole 5 in the direction of arrow a as shown in Figure 3, the drive pin 12 is inclined as indicated by the alternate long and short dashed line in Figure 2. For this reason, the centre plate 3 placed horizontally on the turntable 10 is affected by the inclination of the drive pin 12 and is inclined with respect to the turntable 10.

According to the present invention there is provided a rotary drive apparatus for a disc, wherein when the disc is mounted on a turntable, a central pin arranged in the centre of the turntable and a drive pin arranged at a position away from the centre of the turntable and driven by said turntable via resilient means are respectively inserted in a central hole of the disc and a drive hole formed at a position away from the central hole of the disc, and the disc is driven by the drive pin due to rotation of the turntable, the drive hole of the disc being urged in the direction away from the centre of the turntable by the drive pin, so that the periphery of the central pin is pushed against the edge of the central hole, and the centre of the disc coincides with that of the turntable;

the rotary drive apparatus being characterised by;

moving means carrying said drive pin and capable of moving said drive pin within a predetermined range relative to said turntable on a locus which gradually moves away from the centre of said turntable as said drive pin is moved in the direction opposite to the rotating direction of said turntable; and

urging means for resiliently urging said moving means so as to move said drive pin relative to said turntable in a direction similar to the rotating direction of said turntable;

whereby said drive pin is pushed against the force of said urging means by the edge of said drive hole due to a torque load on said disc when said disc is driven, and moved relative to said turntable in the direction opposite to the rotating direction of said turntable.

Thus embodiments of the present invention provide a rotary drive apparatus for a disc, having a moving means capable of moving a drive pin within a predetermined range relative to a turntable on a locus which gradually moves away from the centre of the turntable as the drive pin is moved in a direction opposite to the rotating direction of the turntable, and an urging means for urging the moving means so as to move the drive pin relative to the turntable in a direction similar to the rotating direction of the turntable, so that the drive pin is pressed by the edge of a drive hole due to a torque load on the disc during rotation of the disc, and moved relative to the turntable against the force of the urging means and gradually moved in a direction away from the centre of the turntable, so as to align the centre of the disc with that of the turntable.

In an embodiment of apparatus according to the present invention having the above-mentioned construction, a biasing force for moving the disc away from the centre of the turntable can be increased in proportion to an increase in the torque load on the disc. Therefore, the upper limit of the torque is not limited. Even if the torque increases greatly, the centre line of the disc can be correctly aligned with that of the turntable.

Furthermore, since the upper limit of the torque load on the disc is not limited, an expensive ball bearing need not be mounted on the upper end of the drive pin, and the cost of the apparatus is therefore reduced.

Since the drive pin is not inclined, the disc will not incline with respect to the turntable and the disc can therefore be stably held horizontally on the turntable.

Since an unstable element such as a leaf spring is not included, the sizes of the respective parts need not be controlled with high precision, manufacture of the parts is relatively easy, and again the cost of the apparatus is reduced.

Because the upper limit of the torque load on the disc is not limited, the frictional force acting between the disc and the pad and recording/reproducing head need not be adjusted with high precision, so design and assembly of the apparatus are relatively easy.

The invention will now be described by way of example with reference to the accompanying drawings, throughout which like parts are referred to by like references, and in which:

Figures 1 to 3 show a previously proposed rotary drive apparatus of a micro-floppy disc, in which:

Figure 1 is an overall perspective view;

Figure 2 is a partial, enlarged sectional view; and

Figure 3 is a partial, enlarged plan view for explaining positioning of the disc; and

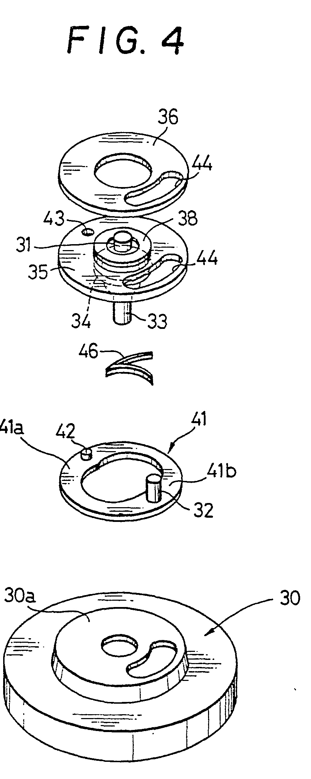

Figures 4 to 13 show an embodiment of rotary drive apparatus of a micro-floppy disc and according to the present invention; in which:

Figure 4 is an exploded perspective view;

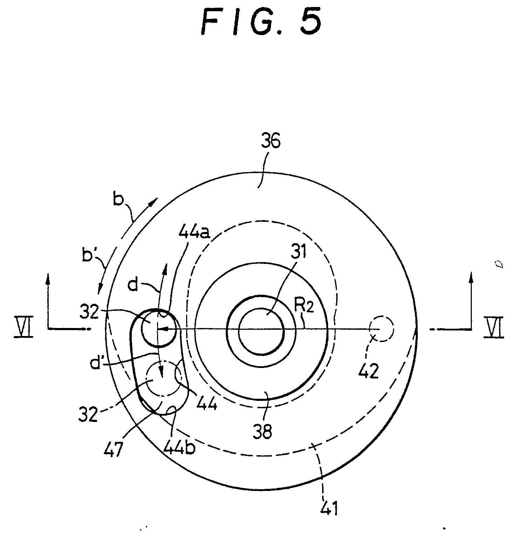

Figure 5 is an enlarged plan view;

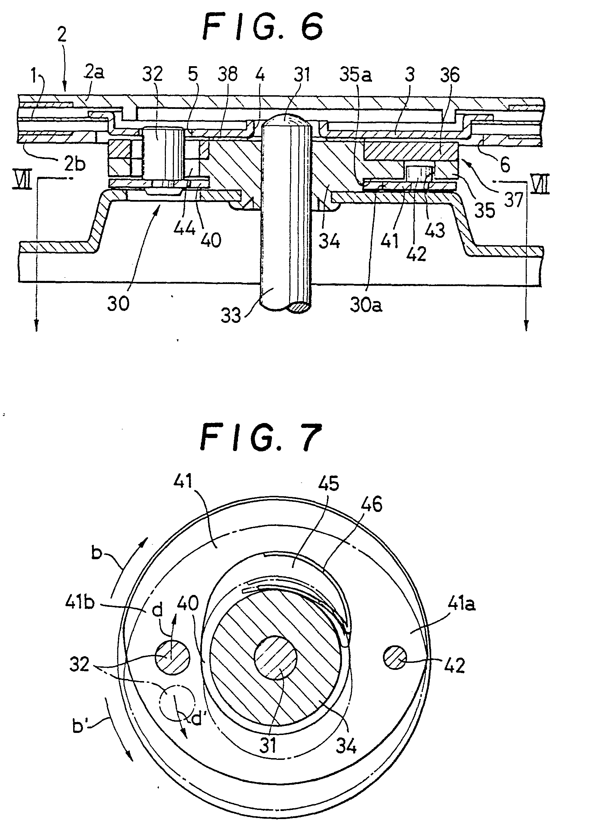

Figure 6 is a sectional view along the line VI—VI in Figure 5;

Figure 7 is a sectional view along the line VII—VII in Figure 6;

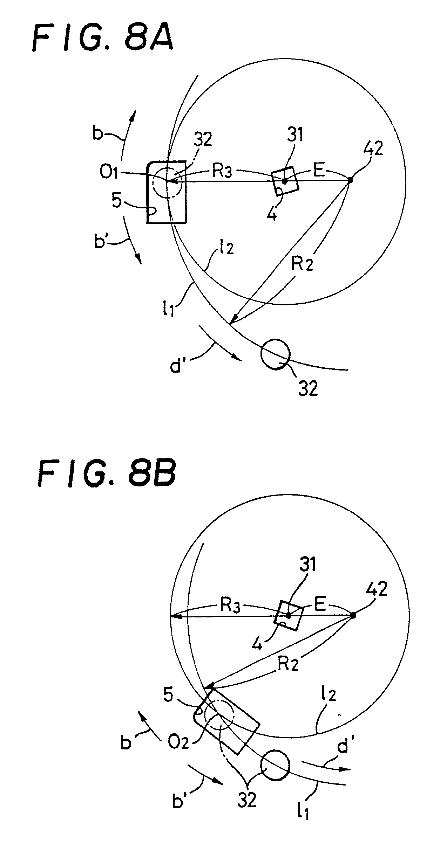

Figures 8A and 8B are views for explaining the moving track of the drive pin;

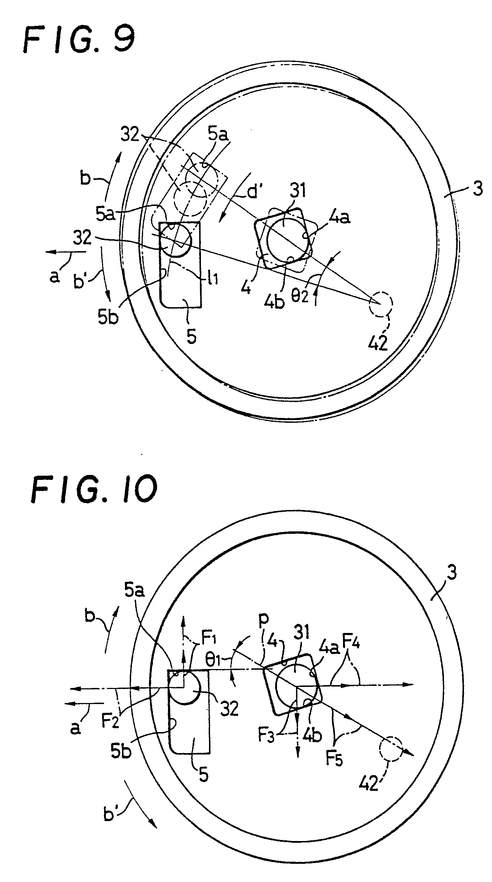

Figures 9 and 10 are enlarged plan views for explaining the positioning operation of the disc; and

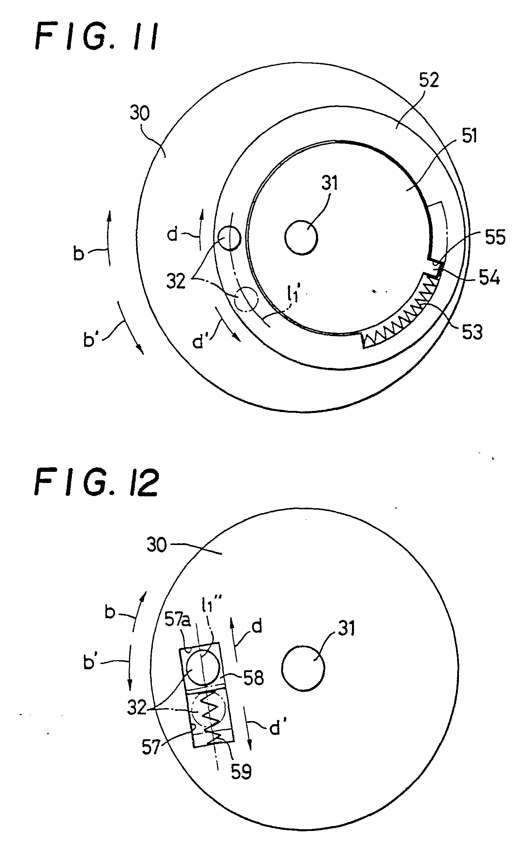

Figures 11, 12 and 13 are enlarged plan views showing modifications of the embodiment.

An embodiment wherein the present invention is applied to a rotary drive apparatus of a micro-floppy disc (to be referred to simply as a disc hereinafter) will now be described with reference to Figures 4 to 13. A central hole 4 and a drive hole 5 formed in a centre plate 3 of a disc 1 shown in Figure 6 are of the same construction as shown in Figures 1 to 3.

Referring to Figures 4 to 7, a central pin 31 and a drive pin 32 are arranged respectively at the centre of and at a position away from the centre of a turntable 30. The central pin 31 is provided at the upper end of a motor shaft 33 similar to the case of the previously proposed apparatus. A magnetic chuck 37 is mounted on the turntable 30. The magnetic chuck 37 comprises a yoke plate 35 formed integrally with a bearing member 34 of the motor shaft 33 which is fixed to the turntable 30, and a magnet plate 36 which is fixedly mounted on the yoke plate 35. The magnet plate 36 is made of, for example, magnetic rubber, and a smooth sheet 38 made of a non-magnetic material is fixedly disposed on the bearing member 34.

A ring plate 41 is horizontally arranged outside the periphery of the bearing member 34 and within a gap 40 between an upper surface 30a of the turntable 30 and a lower surface 35a of the yoke plate 35. A pivot pin 42 fixed to one end portion 41a of the ring plate 41 is pivotally inserted in a pivot pin support hole 43 formed at a position of the yoke plate 35 away from the centre of the turntable 30. The ring plate 41 turns horizontally on the pivot pin 42 in the directions of arrows d and d' as shown in Figure 7. The drive pin 32 comprises a columnar pin without a ball bearing, and extends upright from the other end portion 41b of the ring plate 41 which is at the opposite side of the pivot pin 42 with respect to the central pin 31 of the turntable 30. The drive pin 32 projects upward through elongated, circular-arcuate, holes 44 which have the pivot pin 42 as the centre of the arcs and that are formed respectively in the yoke plate 35 and the magnet plate 36.

The drive pin 32 is movable in the directions of arrows d and d' as shown in Figures 5 and 7 within a predetermined range defined by the arcuately elongated holes 44 from the front to the back or in reverse with respect to the rotating direction of the turntable 30 indicated by arrows b and b'. A spring 46, such as substantially V-shaped leaf spring or the like, is inserted in an arcuate gap 45 formed between the inner periphery of the ring plate 41 and the outer periphery of the bearing member 34. The spring 46 biases the ring plate 41 in the direction of arrow d, as illustrated in Figure 7. The spring 46 is weaker than the torque load on the disc 1. The drive pin 32 is biased with a weak force in the direction of arrow d, that is towards the front with respect to the rotating direction of the turntable 30, and abuts against and is stopped by a front end portion 44a of the hole 44 with respect to the rotating direction of the turntable 30.

The relationship between the circular locus 11 of the drive pin 32 and a circular locus 12 of the drive hole 5 in the centre plate 3 of the disc 1 will now be described with reference to Figures 8A and 8B.

The locus 11 of the drive pin 32 has the pivot pin 42 as a centre and the pivot pin 42 is spaced from the central pin 31 of the turntable 30 by a distance E. The locus 11 with radius R2 gradually moves away from the central pin 31 as the drive pin 32 is moved relative to the turntable 30 towards the back with respect to the rotating direction of the turntable 30, that is, in the direction of arrow d'.

When the central pin 31 of the turntable 30 is inserted in the central hole 4 of the disc 1, and the disc 1 is rotated relative to the turntable 30, the drive hole 5 of the centre plate 3 has the central pin 31 as a centre and describes a circle with radius R3.

In the case shown in Figure 8A, where R2—R3=E, and R2 is greater than R3, the locus 11 of the drive pin 32 contacts the locus 12 of the drive hole 5. In this case, the drive pin 32 biased in the direction of arrow d by the spring 46 abuts against and is stopped by the end portion 44a of the hole 44 towards the front with respect to the rotating direction of the turntable 30, at or near a contact point 01 of the loci 11 and 12.

In the case shown in Figure 8B, where R2—E is greater than R3, and R2 is greater than R3, the locus 11 intersects with the locus 12. The drive pin 32 abuts against and is stopped by the end portion 44a of the hole 44 towards the back with respect to the rotating direction of the turntable 30, at or near the point of intersection 02 of the loci 11 and 12.

As shown in Figures 8A and 8B, the following condition is preferable:

R2—R3 is less than or equal to E

R2—E is less than or equal to R3

Meanwhile, the alignment of the centre line of the disc 1 with that of the turntable 30 when the disc 1 is horizontally mounted on the turntable 30 is performed as described below with reference to Figures 9 and 10.

Referring to Figure 9, while the drive pin 32 is inserted at a position (dotted line) in the drive hole 5 towards the back with respect to the rotating direction of the turntable 30 indicated by the long and short dashed line, and when the turntable 30 is rotated in the direction of arrow b, the drive pin 32 is moved in the direction of arrow b within the drive hole 5 and abuts against the side 5a of the drive hole 5 which is at the front side with respect to the rotating direction of the turntable 30, as indicated by the alternate long and short dashed line. When the turntable 30 is further rotated in the direction of arrow b, the side 5a presses the drive pin 32 towards the back with respect to the rotating direction of the turntable 30 against the spring 46, that is, in the direction of arrow b'. Then, the drive pin 32 which has the pivot pin 42 as a centre is moved relative to the turntable 30 in the direction of arrow d' and is gradually displaced away from the central pin 31 of the turntable 30. When the drive pin 32 is moved by a predetermined angle 02 in the direction of arrow d' as indicated by the solid line, the drive pin 32 is strongly pressed against the side 5b of the drive hole 5. At this time, as indicated by the alternate long and short dashed line in Figure 5, the drive pin 32 does not abut against the end portion 44b of the hole 44 towards the back with respect to the rotating direction of the turntable 30, and a gap 47 is formed between the drive pin 32 and the end portion 44b of the hole 44.

In this manner, the torque on the disc 1 serves to press the side 5a of the drive hole 5 against the drive pin 32. While the drive pin 32 is moved towards the back with respect to the rotating direction of the turntable 30 against the spring 46, the drive pin 32 is gradually displaced away from the central pin 31 of the turntable 30. A force derived from this displacement presses the drive pin 32 strongly against the side 5b of the drive hole 5. As a result, the centre plate 3 is moved in the direction of arrow a as shown in Figures 9 and 10, that is, in the direction away from the central pin 31 of the turntable 30. The centre line of the disc 1 is aligned with that of the turntable 30, and the centre plate 3 is integrally coupled to the turntable 30 through the drive pin 32. The disc 1 and the turntable 30 are driven together in the direction of arrow b.

As shown in Figure 10, as in the case of the previously proposed apparatus, the rotary drive force F1 and the biasing force F2 act on the drive hole 5 by means of the drive pin 32. The resultant force F5 of the reactive forces F3 and F4 generated in the central pin 31 serves to press the two sides 4a and 4b of the central hole 4 against the side surface of the central pin 11. Thus the centre of the disc 1 is aligned with that of the turntable 30.

As described above, the biasing force F2 is generated by the torque load on the disc 1. Therefore, the biasing force F2 is proportional to the torque load on the disc 1 as is the rotary drive force F1. As indicated by the alternate long and short dashed line in Figure 10, when the torque load on the disc 1 is increased, the rotary drive force F1 and the biasing force F2 increase in proportion thereto. Since the forces F1 and F2 increase in proportion to an increase in the torque, the reactive forces F3 and F4 also increase in proportion thereto. For this reason, the line of action of the resultant force F5 always falls substantially on the diagonal line P of the central hole 4. The direction of the resultant force F5 will not deviate widely from the diagonal line P of the central hole 4 towards the side 4b, unlike in the case of the previously proposed apparatus. Since the resultant force F5 stably increases substantially on the diagonal line P with an increase in the torque load on the disc 1, the larger the increase in the torque, the higher the precision of the alignment of the centre line of the disc 1 with that of the turntable 30.

Accordingly, the upper limit of the torque load on the disc 1 is not limited. Even if the torque increases excessively, the correct alignment of the centre-line of the disc 1 with that of the turntable 30 can be achieved.

Since the upper limit of the torque load on the disc 1 is not limited, it is not necessary to reduce the frictional forces generated between the drive pin 32 and the sides 5a and 5b of the drive hole 5, and the ball bearing 14 used in the previously proposed apparatus is not required.

When the ring plate 41 is horizontally pivoted on the turntable 30, the drive pin 32 can be stably pressed in a vertical posture against the sides 5a and 5b of the drive hole 5. Therefore, the central plate 3 will not obliquely float on the turntable 30.

Figure 11 shows a modification of the above embodiment. In this modification, an eccentric inner ring 51 is fixed to a turntable 30, and an eccentric outer ring 52 is rotatably mounted on the eccentric inner ring 51. A drive pin 32 extends upright on the eccentric outer ring 51. The eccentric outer ring 52 is urged in the direction of arrow d by a spring 53. An abutment member 55 disposed in the eccentric outer ring 52 abuts against a stop 54 disposed in the eccentric inner ring 51. The drive pin 32 is thus stopped at the position indicated by the solid line.

In this modification, when the drive torque presses the drive pin 32 in the direction of arrow d' against the spring 53 the eccentric outer ring 52 is rotated around the eccentric inner ring 51 in the direction of arrow d, and the drive pin 32 is moved along a locus 11' substantially similar to the locus 11, as indicated by the alternate long and short dashed line.

Figure 12 shows another modification. In this case, a slider 58 is slidable within an elongated hole 57 formed in a turntable 30. A drive pin 32 extends upright on the slider 58. The slider 58 is urged in the direction of arrow d by a spring 59. The slider 58 thus abuts against an end portion 57a of the elongated hole 57 at the front side with respect to the rotating direction of the turntable 30. The drive pin 32 is stopped at the position indicated by the solid line.

When the drive pin 32 is pressed by the torque in the direction of arrow d' against the spring 59, the slider 58 is slid in the elongated hole 57 in the direction of arrow d'. The drive pin 32 is then moved along a locus 11'' similar to locus 11, as indicated by the alternate long and short dashed line.

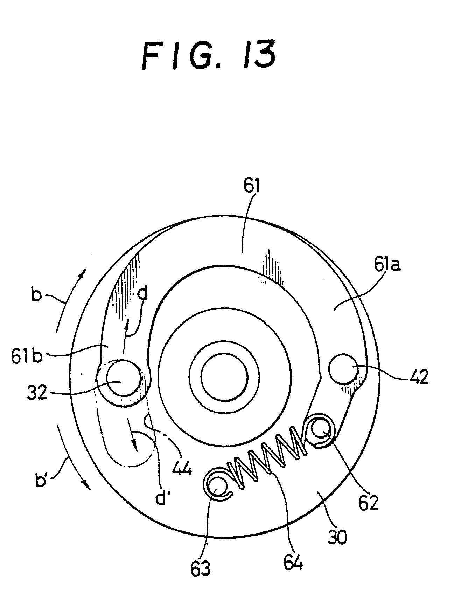

Figure 13 shows still another modification. In this modification, a substantial portion of the lower half of the ring plate 41 shown in Figure 7 is cut away to form a rotating arm 61. One end portion 61a of the rotating arm 61 is pivotally supported by a turntable 30 through a pivot pin 42. A drive pin 32 stands upright on the other end portion 61b of the rotating arm 61. A spring 64 forms a tension spring hooked between the one end portion 61a of the rotating arm 61 and a pair of spring stops 62 and 63 of the turntable 30. The spring 64 urges the rotating arm 61 in the rotating direction of the turntable 30 (in the direction of arrow b or d). The drive pin 32 is movable within a hole 44 formed in the turntable 30 in the directions of arrows d and d'.

The present invention is not limited to a rotary drive apparatus for a micro-floppy disc but can be applied to a rotary drive apparatus for various other recording and/or reproducing discs.

**Claims**

1. A rotary drive apparatus for a disc (1), wherein when the disc (1) is mounted on a turntable (30), a central pin (31) arranged in the centre of the turntable (30) and a drive pin (32) arranged at a position away from the centre of the turntable (30) and driven by said turntable (30) via resilient means are respectively inserted in a central hole (4) of the disc (1) and a drive hole (5) formed at a position away from the central hole (4) of the disc (1), and the disc (1) is driven by the drive pin (32) due to rotation of the turntable (30), the drive hole (5) of the disc (1) being urged in the direction away from the centre of the turntable (30) by the drive pin (32), so that the periphery of the central pin (31) is pushed against the edge of the central hole (4), and the centre of the disc (1) coincides with that of the turntable (30);

the rotary drive apparatus being characterised by:

moving means (41; 45, 52; 58; 61) carrying said drive pin (32) and capable of moving said drive pin (32) within a predetermined range relative to said turntable (30) on a locus which gradually moves away from the centre of said turntable (30) as said drive pin (32) is moved in the direction opposite to the rotating direction of said turntable (30); and

using means (46; 53; 59; 64) for resiliently urging said moving means (41; 51, 52; 58; 61) so as to move said drive pin (32) relative to said turntable (30) in a direction similar to the rotating direction of said turntable (30);

whereby said drive pin (32) is pushed against the force of said urging means (46; 53; 59; 64) by the edge of said drive hole (5) due to a torque load on said disc (1) when said disc (1) is driven, and moved relative to said turntable (30) in the direction opposite to the rotating direction of said turntable (30).

2. An apparatus according to claim 1 wherein said moving means (61) comprises a rotatable arm (61) which has a centre of rotation different in location from the centre of said turntable (30).

3. An apparatus according to claim 1 wherein said urging means (46; 53; 59; 64) comprises a spring (46; 53; 59; 64).

4. An apparatus according to claim 2 wherein said rotatable arm (61) has a pivot (42) at one end, and said drive pin (32) at the other end, and said pivot (42) is arranged at the opposite side of said central pin (31) to said drive pin (32).

5. An apparatus according to claim 2 wherein said rotatable arm (61) is rotatable within a horizontal plane on said turntable (30), and said drive pin (32) comprises a columnar pin (32) without any ball bearing, and standing perpendicularly on said rotatable arm (61).

6. An apparatus according to claim 2 wherein a magnetic chuck (37) for attracting the central portion of said disc (1) is arranged around said central pin (31), and said drive pin (32) extends upward through an elongated hole (44) formed near the periphery of said magnetic chuck (37).

**Patentansprüche**

1. Drehantriebs-Vorrichtung für eine Platte (1), bei der wenn die Platte (1) auf einen Drehteller (30) gelegt ist, ein zentraler Stift (31), der in dem Zentrum des Drehtellers (30) angeordnet ist, und ein Antriebsstift (32), der in einer Position entfernt von dem Zentrum des Drehtellers (30) angeordnet ist und durch den Drehteller (30) über ein elastisches Mittel angetrieben wird, in ein zentrales Loch (34) der Platte (1) bzw. ein Antriebsloch (5), das in einer Position entfernt von dem zentralen Loch (4) der Platte (1) ausgebildet ist, eingeführt sind und die Platte (1) durch den Antriebsstift (32) aufgrund der Drehung des Drehtellers (30) angetrieben wird, wobei das Antriebsloch (5) der Platte (1) durch den Antriebsstift (32) in der Richtung fort von dem Zentrum des Drehtellers (30) gedrückt wird, so daß der Umfang des zentralen Stifts (31) gegen die Kante des zentralen Lochs (4) gedrückt wird und das Zentrum der Platte (1) mit demjenigen des Drehtellers (30) zusammenfällt, gekennzeichnet durch
—ein Bewegungsmittel (41; 51, 52; 58; 61), das den Antriebsstift (32) trägt und in der Lage ist, den Antriebsstift (32) innerhalb eines vorbestimmten Bereichs relativ zu dem Drehteller (30) auf einem Ort zu bewegen, der sich von dem Zentrum des Drehtellers (30) fortbewegt, wenn der Antriebsstift (32) in einer Richtung entgegengesetzt zu der Drehrichtung des Drehtellers (30) bewegt wird, und
—ein Abdrängmittel (46; 53; 59; 64) zum elastischen Abdrängen des Bewegungsmittels (41; 51, 52; 58; 61), um den Antriebsstift (32) relativ zu dem Drehteller (30) in einer Richtung zu bewegen, die ähnlich der Drehrichtung des Drehtellers (30) ist,
wodurch der Antriebsstift (32) gegen die Kraft des Abdrängmittels (46; 53; 59; 64) durch die Kante des Antriebslochs (5) aufgrund einer auf die Platte (1) wirkenden Drehmomentlast verschoben wird, wenn die Platte (1) angetrieben wird, und relativ zu dem Drehteller (30) in der Richtung entgegengesetzt zu der Drehrichtung des Drehtellers (30) bewegt wird.

2. Vorrichtung nach Anspruch 1, bei der das Bewegungsmittel (61) einen drehbaren Arm (61) umfaßt, der ein Rotationszentrum aufweist, das eine von dem Zentrum des Drehtellers (30) unterschiedliche Lage hat.

3. Vorrichtung nach Anspruch 1, bei der das Abdrängmittel (46; 53; 59; 64) eine Feder (46; 53; 59; 64) umfaßt.

4. Vorrichtung nach Anspruch 2, bei der der drehbare Arm (61) an einem Ende einen Drehzapfen (42) und an dem anderen Ende den Antriebsstift (32) aufweist und der Drehzapfen (42) an derjenigen Seite des zentralen Stiftes (31) angeordnet ist, die dem Antriebsstift (32) abgewandt ist.

5. Vorrichtung nach Anspruch 2, bei der der drehbare Arm (61) innerhalb eine horizontalen Ebene auf dem Drehteller (30) drehbar ist und der Antriebsstift (32) aus einem säulenartigen Stift (32) ohne irgendein Kugellager besteht und senkrecht auf dem drehbaren Arm (61) steht.

6. Vorrichtung nach Anspruch 2, bei der eine magnetische Spannvorrichtung (37) zum Anziehen des zentralen Bereichs der Platte (1) um den zentralen Stift (31) herum angeordnet ist und der Antriebsstift (32) sich aufwärts durch ein Langloch (44) erstreckt, das nahe dem Umfang der magnetischen Spannvorrichtung (37) ausgebildet ist.

**Revendications**

1. Appareil d'entraînement en rotation d'un disque (1), dans lequel, lorsque le disque (1) est monté sur un plateau rotatif (3), une broche centrale (31) agencée au centre du plateau rotatif (30) et une broche d'entraînement (32), agencée en un emplacement écarté du centre du plateau rotatif (30) et entraînée par ledit plateau rotatif (30) via des moyens élastiques, sont respectivement insérées dans un trou central (4) du disque (1) et dans un trou d'entraînement (5) formé en un endroit écarté du trou central (4) du disque (1), et le disque (1) est entraîné par la broche d'entraînement (32) sous l'effet de la rotation du plateau rotatif, le trou d'entraînement (5) du disque (1) étant sollicité dans le sens de son éloignement du centre du plateau rotatif (30) par la broche d'entraînement (32), de sorte que la périphérie de la broche centrale (31) est poussée contre le bord du trou central (4) et que le centre du disque (1) coïncide avec celui du plateau rotatif (30);
cet appareil d'entraînement en rotation étant caractérisé par:
des moyens mobiles (41; 51, 52; 58; 61) portant ladite broche d'entraînement (32) et capables de mouvoir ladite broche d'entraînement (32) dans un plage prédéterminée, par rapport audit plateau rotatif (30), sur un lieu géométrique qui s'écarte graduellement du centre dudit plateau rotatif (30) lorsque ladite broche d'entraînement (32) est déplacée dans le sens opposé au sens de rotation dudit plateau rotatif (30); et
des moyens de sollicitation (46; 53; 59; 64) pour solliciter élastiquement lesdits moyens mobiles (41; 51, 52; 58; 61) de manière à déplacer ladite broche d'entraînement (32) par rapport audit plateau rotatif (30) dans un sens similaire au sens de rotation dudit plateau rotatif (30);
par le moyen de quoi ladite broche d'entraînement (32) est poussée contre la force desdits moyens de sollicitation (46; 53; 59; 64), par le bord dudit trou d'entraînement (5), sous l'effet d'une charge due à un couple sur ledit disque (1), lorsque ledit disque (1) est entraîné, et déplacée par rapport audit plateau rotatif (30) dans le sens opposé au sens de rotation dudit plateau rotatif (30).

2. Appareil selon revendication 1, dans lequel lesdits moyens mobiles (61) comprennent un bras tournant (61) qui possède un centre de rotation dont l'emplacement diffère du centre dudit plateau rotatif (30).

3. Appareil selon revendication 1, dans lequel lesdits moyens de sollicitation (46; 53; 59; 64) comprennent un ressort (46; 53; 59; 64).

4. Appareil selon revendication 2, dans lequel ledit bras tournant (61) possède un pivot (42) à une extrémité, et ladite broche d'entraînement (32) à l'autre extrémité, et ledit pivot (42) est agencé du côté de ladite broche centrale (31) opposé à ladite broche d'entraînement (32).

5. Appareil selon revendication 2, dans lequel ledit bras tournant (61) peut tourner dans un plan horizontal sur ledit plateau rotatif (30), et ladite broche d'entraînement (32) comprend une broche en forme de colonne (32) dépourvue de tout roulement à billes, laquelle se dresse perpendiculairement sur ledit bras tournant (61).

6. Appareil selon revendication 2, dans lequel un plateau de serrage magnétique (37) pour attirer la partie centrale dudit disque (1) est autour de ladite broche centrale (31), et ladite broche d'entraînement (32) s'étend vers le haut, au travers d'un trou allongé (44) formé près de la périphérie dudit plateau de serrage magnétique (37).

# FIG. 1

# FIG. 2

# FIG. 3

EP 0 152 266 B1

# FIG. 4

3

# F I G. 5

# FIG. 6

# FIG. 7

# FIG. 8A

# FIG. 8B

## FIG. 9

## FIG. 10

# FIG. 11

# FIG. 12

# F I G. 13